# EUROPÄISCHE PATENTANMELDUNG

(11) **EP 2 172 376 A2**
(43) Veröffentlichungstag der Anmeldung: **07.04.2010**
(21) Anmeldenummer: 09169336.6
(22) Anmeldetag: 03.09.2009
(51) Int. Cl.: B60S 1/04, B60S 1/34

(54) **Scheibenwischervorrichtung**

(30) Priorität: 02.10.2008 DE 102008042585
(71) Anmelder: Robert Bosch GmbH, 70442 Stuttgart (DE)
(72) Erfinder: Barlas, Burak, 76534 Baden-Baden (DE); Kraus, Achim, 77815 Buehl (DE)

(57) **Zusammenfassung**

Scheibenwischervorrichtung (1), insbesondere für ein Kraftfahrzeug, mit einem an einer Fahrzeugkarosserie (2) des Fahrzeuges befestigten Wischerlager (3), in dem eine Lagerwelle (4) gelagert ist, welche einen Befestigungsbereich (4a) aufweist, an dem eine Lagerplatte (5) obenliegend befestigbar ist, um im Wischbetrieb auftretende Kräfte und Momente aufzunehmen und weiterzuleiten, welche dadurch gekennzeichnet ist, dass eine komplementär zum Befestigungsbereich der Lagerwelle ausgebildete Öffnung (5a) in der Lagerplatte (5) vorgesehen ist, über welche die Lagerplatte (5) derart auf den Befestigungsbereich (4a) der Lagerwelle (4) aufschiebbar ist, dass sie im montierten Zustand mit dem Befestigungsbereich (4a) der Lagerwelle (4) eine lösbare, kraft- und/oder formschlüssige Verbindung bildet, mittels der eine zwischen Lagerwelle (4) und Lagerplatte (5) in axialer Richtung maximal zu übertragende Kraft einstellbar ist, wobei sich die Lagerwelle (4) bei Überschreitung der maximal zu übertragenden Kraft aus der kraft- und/oder formschlüssigen Verbindung heraus bewegt.

## Beschreibung

Die vorliegende Erfindung betrifft eine Scheibenwischervorrichtung insbesondere für ein Kraftfahrzeug mit mindestens einem an einer Fahrzeugkarosserie des Fahrzeuges befestigten Wischerlager, in dem jeweils mindestens eine Lagerwelle gelagert ist, welche einen Befestigungsbereich aufweist, an dem eine Lagerplatte obenliegend befestigt ist, um im Wischbetrieb auftretende Kräfte und Momente aufzunehmen und weiterzuleiten.

### Stand der Technik

Derartige Scheibenwischervorrichtungen sind allgemein bekannt und weisen meist einen Wischerhebel auf, der im Betrieb pendelnd über die Scheibe des Kraftfahrzeugs bewegt wird. Dieser ist mit einem Wischerarm versehen, der an seinem freien Ende ein Wischerblatt trägt und an seinem anderen Ende an der Lagerwelle befestigt ist, die wiederum aus der Karosserie des Kraftfahrzeugs herausragt. Problematisch bei diesem Aufbau ist, dass sich bei einem Unfall mit Personenbeteiligung ein auf eine die Lagerwellen verdeckende Motorhaube aufprallender Fußgänger an den von der Karosserie vorstehenden Lagerwellen schwere Verletzungen zuziehen kann. Um dies zu verhindern, wurde vorgeschlagen, die Motorhaube des Kraftfahrzeuges mit einem Mechanismus zu versehen, der bei einem Aufprall eines Fußgängers die Motorhaube anhebt, wodurch die herausragenden Lagerwellen der Scheibenwischervorrichtung durch die Motorhaube abgeschirmt werden. Diese Lösung ist jedoch sehr kostspielig.

In den heutigen Wischerantrieben werden daher die Anforderungen bezüglich des Fußgängeraufprallschutzes mit einer weiteren technischen Lösung sichergestellt. Diese aktuelle technische Lösung stellt im Wesentlichen eine axiale Verschiebung der gesamten Wischerantriebe bzw. der Wischerachsen beim Aufprall eines Fußgängers sicher und trägt so zu einer Minimierung der Verletzung bei.

Eine solche bekannte Lösung ist in der EP 0 739 792 A1 offenbart, in der ein Wischerlager offenbart ist, in dem eine Lagerwelle befestigt ist, wobei das Wischerlager an seiner Aufhängung an der Karosserie mit einer Sollbruchstelle versehen ist, so dass bei einem Aufprall eines Fußgängers auf die Lagerwelle die Verbindung zwischen Karosserie und Wischerlager bricht, so dass die Lagerwelle in das Innere des Kraftfahrzeuges abtauchen kann. Bei einer derartigen Lösung muss jedoch zum einen genug Bauraum unterhalb des Wischerlagers im Inneren des Kraftfahrzeuges zur Verfügung stehen, so dass sich die gesamte Scheibenwischervorrichtung bis auf den Wischarm in das Innere des Kraftfahrzeuges verschieben kann. Der dafür notwendige Bauraum ist jedoch häufig nicht vorhanden. Zum anderen wird die Aufhängung des Wischerlagers dabei zerstört und kann somit nicht wiederverwendet werden.

Die DE 10 2004 005 065 A1 schlägt für solch einen Fall vor, die Lagerwelle zweiteilig auszubilden und die beiden Teile der Lagerwelle als Abschnitte durch eine definierte, axiale Kraft relativ zueinander bewegbar auszuführen. Dadurch wird zwar erreicht, dass beim Aufprall eines Fußgängers die Lagerwelle ins Innere des Kraftfahrzeuges abtauchen kann, ohne dass die gesamte Scheibenwischervorrichtung aus ihrer Position heraus bewegt werden muss. Allerdings bringt dieser Aufbau den Nachteil mit, dass die Lagerwelle aus mehreren Teilen zusammengesetzt werden muss und insbesondere der untere Teil vorzugsweise hohl ausgebildet ist, wodurch die Übertragung gerade von Biege- und Torsionsmomenten durch diesen Abschnitt der Lagerwelle beschränkt ist. Ferner eignet sich ein solcher Aufbau für Scheibenwischervorrichtungen mit obenliegend befestigter Lagerplatte nicht, da der Befestigungsbereich auf Höhe der Hülse aufgrund der verringerten Materialstärke in diesem Bereich und der damit verminderten Biege- und Torsionssteifigkeit als Befestigungspunkt nicht geeignet erscheint. Aufgrund der Kinematik der Wischerantriebe mit oben liegenden Lagerplatten und auch aufgrund kundenspezifischer Anforderungen erscheint hier eine solche technische Lösung nicht anwendbar.

### Offenbarung der Erfindung

Es ist daher Aufgabe der vorliegenden Erfindung, eine Scheibenwischervorrichtung mit obenliegender Lagerplatte mit einem zuverlässigen und kostengünstig herzustellenden Fußgängeraufprallschutz bereitzustellen.

Diese Aufgabe wird erfindungsgemäß dadurch gelöst, dass eine komplementär zum Befestigungsbereich der Lagerwelle ausgebildete Öffnung in der Lagerplatte vorgesehen ist, über welche die Lagerplatte derart auf den Befestigungsbereich der Lagerwelle aufschiebbar ist, dass sie im montierten Zustand mit dem Befestigungsbereich der Lagerwelle eine lösbare, kraft- und/oder formschlüssige Verbindung bildet, mittels der eine zwischen Lagerwelle und Lagerplatte in axialer Richtung maximal zu übertragende Kraft einstellbar ist, wobei sich die Lagerwelle bei Überschreitung der maximal zu übertragenden Kraft aus der kraft- und/oder formschlüssigen Verbindung heraus bewegt.

Durch die Möglichkeit, bei der kraft- und/oder formschlüssigen Verbindung eine maximal zu übertragende Kraft einstellen zu können, werden im Betrieb der Scheibenwischervorrichtung auftretende Kräfte und Momente zuverlässig aufgenommen und weitergeleitet, sofern diese unterhalb der maximal zu übertragenden Kraft in axialer Richtung bleiben. Die bei Betrieb auftretende Biege- und Torsionsmomente bzw. Kippmomente, deren axiale Komponenten ebenfalls übertragen werden sollen, sind dabei wesentlich geringer als die bei einem Aufprall eines Fußgängers gegebenenfalls auftretenden und auf die Lagerwellen wirkenden axialen Kräfte. Aufgrund dieses nicht unerheblichen Kraftunterschiedes ist es auf einfache Weise möglich, die maximal zu übertragende Kraft zwischen Lagerwelle und Lagerplatte so einzustellen, dass die betriebsbedingten axialen Kräfte durch die erfindungsgemäße Scheibenwischervorrichtung zuverlässig übertragen werden und gleichzeitig der Fußgängeraufprallschutz im Bereich der Lagerwellen auch bei geringerer Aufprallgeschwindigkeit ausgelöst wird.

In einem Ausführungsbeispiel taucht die Lagerwelle bei Überschreiten der maximal zu übertragenden Kraft aus der kraft- und/oder formschlüssigen Verbindung in einen durch die Fahrzeugkarosserie unterhalb der Lagerwelle gebildeten Bauraum ab. Die maximale Abtauchtiefe der Lagerwelle ist somit lediglich von dem zur Verfügung stehenden Bauraum begrenzt. Ein weiterer Vorteil dieser Ausbildung des Fußgängeraufprallschutzes ist darin zu sehen, dass bei Betätigung dieses Mechanismus die Scheibenwischervorrichtung nicht zerstört wird, sondern die kraft- und/oder formschlüssige Verbindung nach Lösen der Lagerwelle aus der Lagerplatte durch einfaches Wiedereinsetzen der Lagerwelle in die Öffnung der Lagerplatte unter Bildung der kraft- und/oder formschlüssigen Verbindung wiederherstellbar ist.

Zweckmäßiger Weise kann vorgesehen sein, die kraft- und/oder formschlüssige Verbindung durch eine Presspassung zu bilden. Dazu kann der Befestigungsbereich zylinderförmig ausgebildet sein. Die Presspassung kann in diesem Ausführungsbeispiel so eingestellt werden, dass der Außendurchmesser des Befestigungsbereichs der Lagerwelle leicht größer ist als der Innendurchmesser der Öffnung in der Lagerplatte.

Ist der Befestigungsbereich der Lagerwelle im Wesentlichen zylindrisch ausgebildet, kann zur Verdrehsicherung ferner mindestens eine Abflachung vorgesehen sein, die jeweils mit einem in der Öffnung der Lagerplatte komplementär zur Abflachung ausgebildeten Vorsprung zur Bildung eines Formschlusses zusammenwirkt. Auf diese Weise wird eine einfache und gleichzeitig verdrehsichere kraft- und/oder formschlüssige Verbindung zwischen Lagerplatte und Lagerwelle bereitgestellt. Um auch zuverlässig beim Betrieb eventuell auftretende Kippmomente über die kraft- und/oder formschlüssige Verbindung aufnehmen und weiterleiten zu können, können in einem Ausführungsbeispiel die Abflachungen so angeordnet sein, dass sie einen Außenvielkant, wie beispielsweise ein Sechseck bilden, die mit dem komplementär zum Außenvielkant ausgebildeten, die Öffnung der Lagerplatte bildenden Vielkant zusammenwirkt. Natürlich sind auch Acht- oder n-Ecke ausbildbar.

Weiterhin ist es vorteilhaft, wenn die Verjüngung als Außenvielkant und die Öffnung als Innenvielkant ausgebildet ist, da bei einer derartigen Ausbildung die einzelnen Abschnitte der Lagerwelle und der Lagerplatte nicht zwingend verstemmt werden müssen und trotzdem eine hohe Drehmomentübertragung bei gleichzeitiger Kippfestigkeit gewährleistet ist. Außerdem kann auf diese Weise die kraft- und/oder formschlüssige Verbindung auf einfache Weise reproduzierbar hergestellt und die maximal zu übertragende Kraft eingestellt werden.

Eine besonders zuverlässige kraft- und/oder formschlüssige Verbindung stellt sich ein, wenn an dem Befestigungsbereich eine Rändelung ausgebildet ist. Die Zähne der Rändelung können dabei mittels kraft- und formschlüssiger Verbindung die betriebsbedingten Kräfte und Momente im Wischbetrieb aufnehmen und weiterleiten. Dabei sollte die Rändelung so ausgebildet sein, dass die axiale Kraft bzw. der axiale Energieimpuls beim Aufprall eines Fußgängers ausreicht, um die kraftschlüssige Verbindung zwischen Lagerwelle und Lagerplatte zu lösen und so die Lagerwelle aus der Lagerplatte axial zu verschieben.

Zur genaueren Einstellung der maximal zu übertragenden Kraft kann in einem Ausführungsbeispiel der Befestigungsbereich der Lagerwelle mit einer Verjüngung ausgeführt sein oder aber der Durchmesser der Öffnung in der Lagerplatte variiert werden. Dabei kann die Durchmesseränderung in der Lagerplatte so ausgelegt werden, dass die Pressung im oberen Teil des Verbindungsbereichs größer ist als im unteren Bereich. Dadurch können die im Wischbetrieb entstehenden Biegemomente von der kraft- und/oder formschlüssigen Verbindung besser aufgenommen und weitergeleitet werden.

Eine besonders hohe Drehmomentübertragung wird dadurch erzielt, dass der Befestigungsbereich der Lagerwelle mindestens eine Längs- und/oder eine Quernut aufweist, die jeweils mit einem in der Öffnung der Lagerplatte komplementär zu der Längs- und/oder Quernut ausgebildete Führungssteg zusammenwirkt.

Eine weitere Möglichkeit, die maximal zu übertragende Kraft möglichst exakt einzustellen, kann durch Variation der Stufenlänge der verschiedenen Durchmesser des Befestigungsbereichs und/oder der Öffnung in der Lagerplatte erfolgen.

In einem weiteren Ausführungsbeispiel der vorliegenden Erfindung ist zur Vereinfachung der Positionierung der Lagerplatte auf der Lagerwelle unterhalb des Befestigungsbereichs der Lagerwelle ein Absatz an der Lagerwelle ausgebildet. Damit ist es möglich, die Position der Lagerplatte auf der Lagerwelle festzulegen, indem die Lagerplatte bei der Montage solange auf die Lagerwelle aufgeschoben wird, bis sie mit dem Absatz an der Lagerwelle in Anschlag kommt.

Hinsichtlich weiterer vorteilhafter Ausführungsformen der vorliegenden Erfindung wird auf die Unteransprüche sowie nachfolgende Beschreibung diverser Ausführungsbeispiele anhand der beiliegenden Zeichnungen verwiesen.

### Ausführungsbeispiel

Es zeigt:
- Figur 1: ein Wischerlager einer erfindungsgemäßen Scheibenwischervorrichtung mit obenliegender Lagerplatte;
- Figur 2: eine perspektivische Teildarstellung einer erfindungsgemäßen kraft- und formschlüssigen Verbindung zwischen Lagerwelle und Lagerplatte mit Rändelung;
- Figur 3: die kraft- und formschlüssige Verbindung gemäß Figur 2 von oben;
- Figur 4: eine schematische Darstellung der kraftschlüssigen Verbindung mit variierenden Innendurchmessern der Erfindung in der Lagerplatte und unterschiedlichen Stufenlängen;
- Figur 5: eine Teildarstellung einer erfindungsgemäßen Scheibenwischervorrichtung mit einem Befestigungsbereich mit Abflachung; und
- Figur 6: eine Teildarstellung einer weiteren erfindungsgemäßen Scheibenwischervorrichtung gemäß Figur 1.

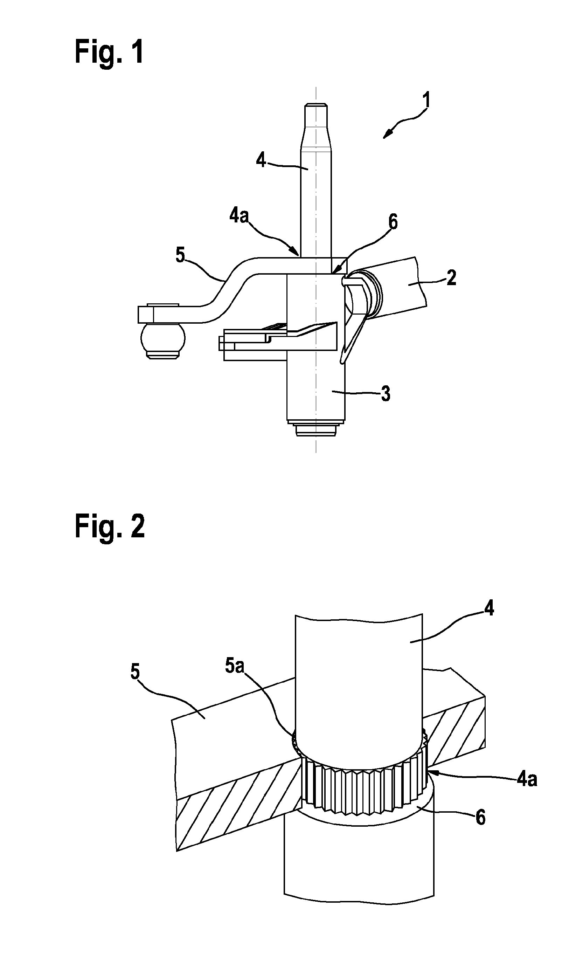

Die Figuren 1 bis 3 zeigen eine Teildarstellung einer erfindungsgemäßen Scheibenwischervorrichtung 1 für ein Kraftfahrzeug mit einem an einer Fahrzeugkarosserie 2 des nicht dargestellten Fahrzeuges befestigten Wischerlager 3. In dem Wischerlager 3 ist eine Lagerwelle 4 gelagert. An der Lagerwelle ist ein Befestigungsbereich 4a ausgebildet, an dem eine Lagerplatte 5 obenliegend befestigt ist, um im Wischbetrieb auftretende Kräfte und Momente aufzunehmen und weiterzuleiten. Die Lagerwelle 5 weist zur Bildung einer kraft- und formschlüssigen Verbindung eine Öffnung 5a auf. Unterhalb der montierten Lagerplatte 5 ist an der Lagerwelle 4 zur Erleichterung der Positionierung der Lagerplatte 5 an dem Befestigungsbereich 4a der Lagerwelle 4 ein Absatz 6 ausgebildet.

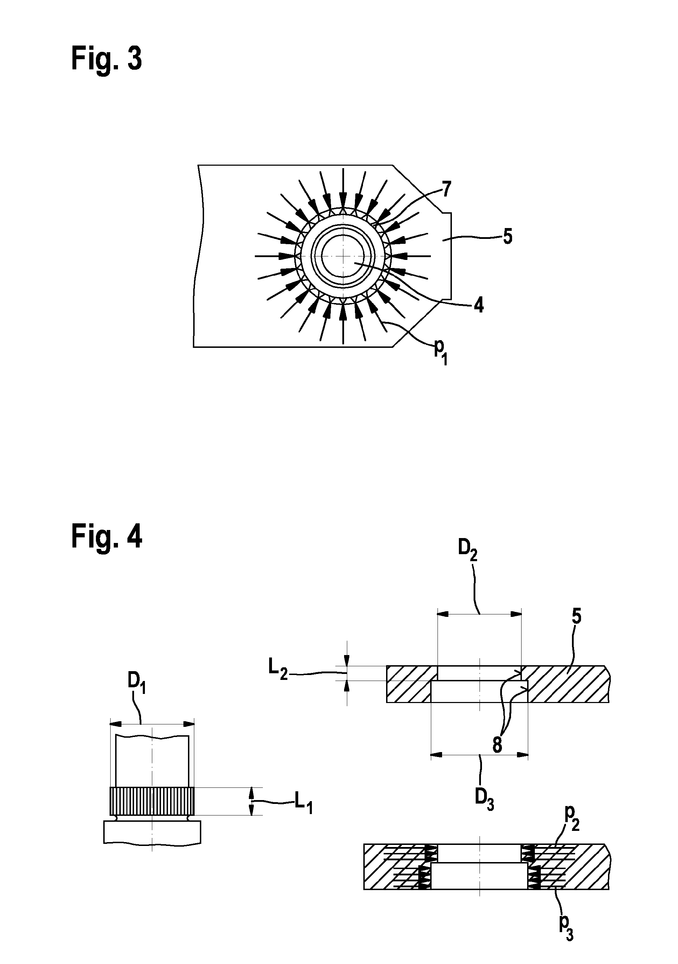

Die kraft- und formschlüssige Verbindung wird hier durch Vorsehung einer Rändelung 7 (siehe auch Figur 2 und 3) im Befestigungsbereich 4a unterstützt. Die Zähne der Rändelung 7 nehmen mittels kraft- und formschlüssiger Verbindung die im Wischbetrieb entstehenden Kräfte und Momente auf und leiten sie weiter. Dabei ist die Rändelung 7 so ausgelegt, dass die im Betrieb entstehenden Kräfte und Momente sicher übertragen werden und gleichzeitig eine axiale Kraft F bzw. ein axialer Energieimpuls I ausreicht, um die kraftschlüssige Verbindung zwischen Lagerwelle 4 und Lagerplatte 5 zu lösen, so dass sich die Lagerwelle 4 aus der Lagerplatte 5 axial heraus bewegt. Da die im Betrieb auftretenden Kräfte und Momente bzw. deren axialer Anteil deutlich geringer ist als der beim Aufprall zu erwartende Kraftimpuls I in axialer Richtung, ist der Toleranzbereich der durch die Rändelung aufzubringenden Pressung p₁ ausreichend groß, um bei der Einstellung der kraft- und/oder formschlüssigen Verbindung eine sichere Abgrenzung zwischen betriebsbedingt auftretenden Kräften und aufprallbedingten Kräften treffen zu können. Ferner sorgen die Zähne der Rändelung dafür, dass die Lagerplatte 5 auf der Lagerwelle 4 nicht durchrutscht.

Zur Bildung der lösbaren kraft- und formschlüssigen Verbindung wird die Lagerplatte 5 auf die Lagerwelle 4 aufgeschoben, bis sie mit dem Befestigungsbereich 4a der Lagerwelle in Eingriff gelangt und am Anschlag 6 anliegt. Die so hergestellte lösbare kraft- und formschlüssige Verbindung wird durch Variation des Außendurchmessers des Befestigungsbereichs 4a der Lagerwelle bzw. des Innendurchmessers der Öffnung 5a der Lagerplatte 5 und der sich daraus ergebenden Presspassung eingestellt, so dass sich die Lagerwelle 4 bei Überschreitung einer maximal zu übertragenden Kraft aus der kraft- und formschlüssigen Verbindung heraus bewegt, um so einen effektiven und einfachen Fußgängeraufprallschutz bereitzustellen. Dieser Absatz 6 stellt aufgrund der Reduzierung der Freiheitsgrade bei der Montage der Lagerplatte 5 auf der Lagerwelle 4 eine erhebliche Erleichterung dar. Durch Vorsehen des Absatzes 6 und somit einer Wegbegrenzung in axialer Montagerichtung ist es möglich, eine automatisierte Montage vorzunehmen. Ferner kann nach Auslösen des Fußgängeraufprallschutzes die Wiederherstellung der kraft- und formschlüssigen Verbindung zwischen Lagerwelle 4 und Lagerplatte 5 auch in einer Werkstatt durchgeführt werden, ohne dass dazu aufwendige Anpassungen und Vermessungen durchgeführt werden müßten, um den genauen Sitz der Lagerplatte 5 auf der Lagerwelle 4 reproduzierbar einstellen zu können.

In einem nicht dargestellten Ausführungsbeispiel erfolgt die Einstellung der Presspassung zwischen Lagerwelle 4 und Lagerplatte 5 durch eine zwischengeschaltete Hülse. Diese Hülse ist aus einem Blechteil oder aus einem Kunststoffteil gefertigt und zur Einstellung eines bestimmten Reibwertes zur Verhinderung eines Durchrutschens zwischen Lagerwelle 4 und Lagerplatte 5 oberflächenbehandelt, beispielsweise gesandstrahlt. Alternativ können diese Hülsen auch aus einem Sintermetall oder eines anderen geeigneten Werkstoff gefertigt sein. Natürlich können auch diese Ausführungen zusätzlich Stege zur Erhöhung des Reibwertes und zur Sicherung der Presspassung aufweisen.

Figur 4 zeigt ein weiteres Ausführungsbeispiel der vorliegenden erfindungsgemäßen Scheibenwischervorrichtung 1. Die Presspassung P₁ wird im Wesentlichen durch den Außendurchmesser D₁ der Rändelung 7 der Lagerwelle 4 und die Stufenlänge L₁ der Rändelung 7 in Verbindung mit dem Innendurchmesser der Öffnung 5a gebildet. Wird nun wie in dem Ausführungsbeispiel gemäß Figur 4 die Öffnung 5a mit Stufenbohrung 8 mit den Durchmessern D₂ und D₃ und der Stufenlänge L₂ ausgeführt, und der Durchmesser D₂ wie in dem Ausführungsbeispiel gezeigt, kleiner gewählt als der Durchmesser D₃ so ergibt sich dadurch eine Presspassung p₂ über die Länge L₂, die größer ist als die Presspassung p₃, die sich im Bereich des Durchmessers D3 zwischen Lagerplatte 5 und Lagerwelle 4 aufbaut. Dies führt dazu, dass die im Wischbetrieb entstehenden Biegemomente besser aufgenommen und weitergeleitet werden können. Ferner werden durch Wahl von in Abtauchtiefe größer werdendem Innendurchmesser der Bohrung 5a der Lagerplatte 5 die von der Lagerwelle 5 zu überwindenden Reibkräfte mit zunehmender Abtauchtiefe immer geringer, wodurch ein schnelles Abtauchen der Lagerwelle 4 in den Bauraum gewährleistet wird, was mit einem schnelleren Auslösen des Fußgängeraufprallschutzmechanismus gleichzusetzen ist.

In einem weiteren, nicht dargestellten Ausführungsbeispiel wird dieser Effekt dadurch erreicht, dass eine entsprechende Verjüngung in dem zylinderförmigen Berührungsbereich 4a der Lagerwelle 4 vorgesehen ist. Auch hier nehmen durch die Verjüngung und die damit verbundene Verringerung des Durchmessers die Reibkräfte mit zunehmender Abtauchtiefe durch Verringerung der Presspassung p ab.

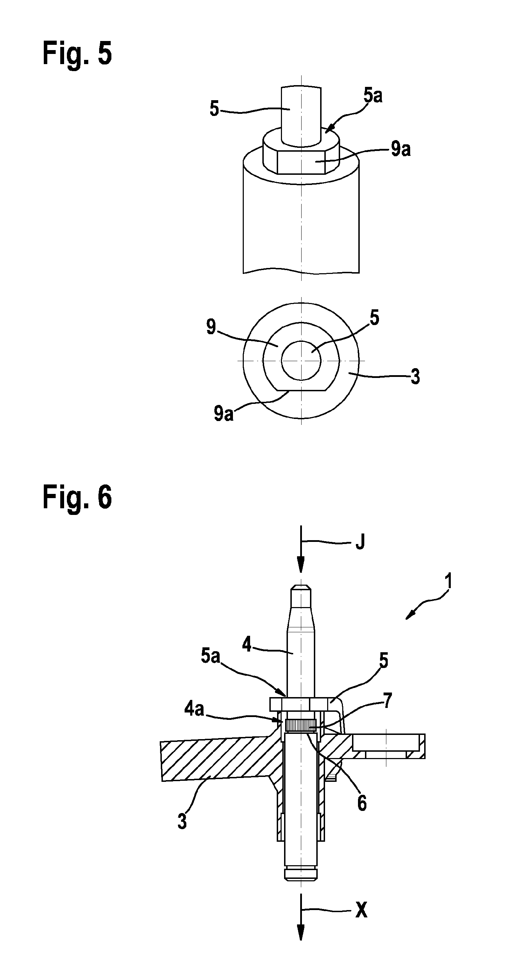

Figur 5 zeigt eine Scheibenwischervorrichtung 1 mit einer alternativen Ausführungsform einer erfindungsgemäßen kraft- und/oder formschlüssigen Verbindung. Die Anbindung zwischen Lagerplatte 5 und Lagerwelle 4 erfolgt hier über einen im Wesentlichen zylinderförmig ausgebildeten Berührungsbereich 4a, an dem eine Abflachung 9a der sonst kreisförmig ausgebildeten Querschnittsfläche 9 vorgesehen ist. Die Abflachung 9a des Befestigungsbereichs 4a der Lagerwelle 4 wirkt mit einem an der Lagerplatte 5 innerhalb der Öffnung 5a ausgebildeten Vorsprung derart zusammen, dass ein Durchrutschen der Lagerwelle 4 in der Öffnung 5a der Lagerplatte 5 erst bei Überschreitung eines maximal zu übertragenden Biegemoments erfolgt.

In einem alternativen Ausführungsbeispiel ist der Berührungsbereich 5a so mit Abflachungen 9a versehen, dass er eine sechseckige oder aber auch polygonförmige Querschnittsfläche bildet. Die Öffnung 5a in der Lagerplatte 5 ist korrespondierend mit der Querschnittsfläche 9 der Lagerwelle 4 ausgeführt. Zur Unterstützung und Einstellung der Presspassung p zwischen Lagerwelle 4 und Lagerplatte 5 ist zwischen dem Befestigungsbereich 4a und der Öffnung 5a eine Schelle oder ein Sinterbauteil eingesetzt. Über den sich über die Schelle oder das Sinterbauteil ergebenden Reibwert und die durch Wahl der Durchmesser der Querschnittsflächen einzustellende Presspassung können die zu übertragenden Kräfte und Biegemomente sehr genau eingestellt werden.

Figur 6 zeigt eine Momentaufnahme einer Teildarstellung einer erfindungsgemäßen Scheibenwischervorrichtung gemäß Figur 1, bei der der Fußgängeraufprallschutzmechanismus durch einen axial wirkenden Impuls I ausgelöst wurde und die Lagerwelle 4 bereits um einen Betrag ΔX in den Bauraum der Fahrzeugkarosserie abgetaucht ist. Wie man unschwer ersehen kann, hat sich dazu der mit einer Rändelung 7 versehene Befestigungsbereich 4a bereits aus der Öffnung 5a der Lagerplatte 5 heraus bewegt und kann nunmehr lediglich entgegen der sich aus der Lagerung des Wischerlagers 3 ergebenden Reibkraft nahezu ohne Widerstand weiter nach unten in den Bauraum absenken. Um zu einem späteren Zeitpunkt die kraft- und formschlüssige Verbindung wieder herzustellen, ist es lediglich notwendig, die Lagerwelle 4 so weit in dem Wischerlager 3 nach oben zu bewegen, bis der Befestigungsbereich 4a der Lagerwelle 4 und die Öffnung 5a der Lagerplatte 5 in Eingriff gelangen und die Lagerplatte 5 am Anschlag 6 zur Anlage kommt. Aus der Beschreibung ist erkennbar, dass der hier dargestellte Fußgängeraufprallschutzmechanismus somit zerstörungsfrei ausgelöst werden kann, ohne dabei die Scheibenwischervorrichtung 1 nachhaltig zu schädigen.

## Patentansprüche

1. Scheibenwischervorrichtung (1), insbesondere für ein Kraftfahrzeug, mit mindestens einem an einer Fahrzeugkarosserie des Fahrzeuges befestigten Wischerlager (3), in dem jeweils mindestens eine Lagerwelle (4) gelagert ist, welche einen Befestigungsbereich (4a) aufweist, an dem eine Lagerplatte (5) obenliegend befestigbar ist, um im Wischbetrieb auftretende Kräfte und Momente aufzunehmen und weiterzuleiten, **dadurch gekennzeichnet, dass** eine komplementär zum Befestigungsbereich der Lagerwelle ausgebildete Öffnung in der Lagerplatte vorgesehen ist, über welche die Lagerplatte derart auf den Befestigungsbereich der Lagerwelle aufschiebbar ist, dass sie im montierten Zustand mit dem Befestigungsbereich der Lagerwelle eine lösbare, kraft- und/oder formschlüssige Verbindung bildet, mittels der eine zwischen Lagerwelle und Lagerplatte in axialer Richtung maximal zu übertragende Kraft einstellbar ist, wobei sich die Lagerwelle bei Überschreitung der maximal zu übertragenden Kraft aus der kraft- und/oder formschlüssigen Verbindung heraus bewegt.

2. Scheibenwischervorrichtung (1) nach Anspruch 1, **dadurch gekennzeichnet, dass** die Lagerwelle (4) bei Überschreiten der maximal zu übertragenden Kraft aus der kraft-und/oder formschlüssigen Verbindung in einen durch die Fahrzeugkarosserie (2) unterhalb der Lagerwelle (4) gebildeten Bauraum abtaucht.

3. Scheibenwischervorrichtung (1) nach Anspruch 1 oder 2, **dadurch gekennzeichnet, dass** die kraft- und/oder formschlüssige Verbindung durch eine Presspassung (P1) gebildet ist.

4. Scheibenwischervorrichtung (1) nach einem der Ansprüche 1 bis 3, **dadurch gekennzeichnet, dass** die kraft- und/oder formschlüssige Verbindung durch eine Rändelung (7) gebildet ist.

5. Scheibenwischervorrichtung (1) nach einem der vorherigen Ansprüche, **dadurch gekennzeichnet, dass** der Befestigungsbereich (4a) zylinderförmig ausgebildet ist.

6. Scheibenwischervorrichtung (1) nach Anspruch 5, **dadurch gekennzeichnet, dass** der Befestigungsbereich (4a) der Lagerwelle (4) mit mindestens eine Abflachung (9) versehen ist, die jeweils mit einem in der Öffnung (5a) der Lagerplatte (5) komplementär zur Abflachung (9) ausgebildeten Vorsprung zusammenwirkt.

7. Scheibenwischervorrichtung (1) nach einem der vorhergehenden Ansprüche, **dadurch gekennzeichnet, dass** der Befestigungsbereich (4a) der Lagerwelle (4) eine Verjüngung oder die Öffnung (5a) in der Lagerplatte (5) mindestens eine Stufenbohrung (8) aufweist.

8. Scheibenwischervorrichtung (1) nach einem der vorhergehenden Ansprüche, **dadurch gekennzeichnet, dass** der Befestigungsbereich (4a) der Lagerwelle (4) mindestens eine Längs-und/oder eine Quernut aufweist, die jeweils mit einem komplementär zu der Längs- und/oder Quernut ausgebildeten Führungssteg zusammenwirkt.

9. Scheibenwischervorrichtung (1) nach Anspruch 7 oder 8, **dadurch gekennzeichnet, dass** durch Variation einer Stufenlänge (L₁, L₂) der Durchmesser (D₁, D₂, D₃) des Befestigungsbereichs (4a) und/oder der Öffnung (5a) der Lagerplatte (5) die über die kraft- und/oder formschlüssige Verbindung maximal zu übertragende Kraft in axialer Richtung einstellbar ist.

10. Scheibenwischervorrichtung (1) nach einem der vorhergehenden Ansprüche, **dadurch gekennzeichnet, dass** zur Positionierung der Lagerplatte (5) auf der Lagerwelle (4) unterhalb des Befestigungsbereichs (4a) der Lagerwelle (4) ein Absatz (6) an der Lagerwelle (4) ausgebildet ist.
